Europäisches Patentamt

European Patent Office

Office européen des brevets

(19)

(11) **EP 0 846 187 B1**

## (12) EUROPEAN PATENT SPECIFICATION

(45) Date of publication and mention
of the grant of the patent:
**27.10.1999 Bulletin 1999/43**

(21) Application number: **96928211.0**

(22) Date of filing: **14.08.1996**

(51) Int Cl.[6]: **C22B 3/12**

(86) International application number:
**PCT/US96/13317**

(87) International publication number:
**WO 97/07249 (27.02.1997 Gazette 1997/10)**

(54) **RECOVERY OF ELEMENTS INVOLVING A CHEMICAL PROCESSING STEP**

GEWINNUNG VON ELEMENTEN UNTER ANWENDUNG EINES CHEMISCHEN
VERFAHRENSCHRITTES

RECUPERATION D'ELEMENTS IMPLIQUANT UNE ETAPE DE TRAITEMENT CHIMIQUE

(84) Designated Contracting States:
**AT BE CH DE DK ES FI FR GB GR IE IT LI LU MC
NL PT SE**

(30) Priority: **15.08.1995 US 2352 P**

(43) Date of publication of application:
**10.06.1998 Bulletin 1998/24**

(73) Proprietor: **Discovery Resources, Inc.
Houston, TX 77210 (US)**

(72) Inventor: **GREEN, Frederick, Hall
Spring Hill, KS 66083 (US)**

(74) Representative: **Sexton, Jane Helen
J.A. KEMP & CO.
14 South Square
Gray's Inn
London WC1R 5LX (GB)**

(56) References cited:
**WO-A-81/03500**          **FR-A- 2 691 649**
**GB-A- 1 263 360**        **US-A- 3 743 501**
**US-A- 4 499 062**        **US-A- 4 606 765**
**US-A- 5 439 505**

- **KIRK-OTHMER: "ENCYCLOPEDIA OF
CHEMICAL TECHNOLOGY" 1982 , JOHN WILEY
& SONS , NEW YORK - CHICHESTER -
BRISBANE ET AL., THIRD EDITION, VOL 20
XP002020255 cited in the application see page
748 - page 781**

**Description**

TECHNICAL FIELD

The present invention relates to improved methods for the extraction and/or recovery of elements, more preferably metals, from starting materials such as mineral ores, recyclable wastes, contaminated soils, toxic wastes such as dusts producing through steelmaking processes (such as electric arc furnace dusts and BOP dusts), and other materials. More particularly, the present invention relates to methods involving a chemical processing step in which the starting materials are contacted with a caustic silica solution.

BACKGROUND

A wide variety of methods for chemical extraction and/or recovery are known in the art, particularly in regard to extraction and/or recovery of metals from materials such as mineral ores, recyclable wastes, and contaminated soils. Such methods include, for example, amalgamation, which often produces health hazards and clean-up hazards; flotation, which requires finely ground, de-slimed, clean, free metal; cyanide treatment, which offers very specific extraction, but presents environmental hazards; centrifugal concentration, which works primarily for free or heavy metals; electrolytic/electrowinning, which is expensive and slow; thermal/furnace processes, which are energy intensive and expensive; and chlorination/bromination processes, which require high pressure digestors which are both expensive and hazardous, as they are prone to leaks.

A process for leaching lead-containing zinciferous material with a caustic solution is known, for instance from US-A-3 543 501.

The present invention overcomes many of the disadvantages of known extraction and/or recovery methods by providing such methods which involve a chemical processing step that is usually performed under mild conditions, that employs relatively inexpensive reagents, and that generates relatively innocuous by-products or wastes.

DISCLOSURE OF THE INVENTION

One aspect of the present invention pertains to methods for the extraction of an element from a starting material comprising solids, said solids comprising said element, which method comprises the steps of: providing a liquid caustic solution; contacting said starting material with said caustic solution to form a mixture of solids and liquid, thereby solubilizing said element in said liquid; and separating a liquid extract from said mixture of solids and liquid, said liquid extract containing said solubilized element, characterized in that the liquid caustic solution is a liquid caustic silica solution.

In some preferred embodiments, said caustic silica solution comprises 0.001% to about 5% w/w dissolved silica. In some preferred embodiments, said caustic silica solution comprises silica; and one or more of sodium hydroxide, potassium hydroxide, and ammonium hydroxide. In some preferred embodiments, said caustic silica solution comprises silica; and one or more of sodium hydroxide, potassium hydroxide, and ammonium hydroxide. In some preferred embodiments, said caustic silica solution comprises silica; and an alkali metal hydroxide. In some preferred embodiments, said caustic silica solution comprises silica; and one or more of sodium hydroxide and potassium hydroxide. In some preferred embodiments, said caustic silica solution comprises silica; and sodium hydroxide. In some preferred embodiments, said caustic silica solution comprises silica and 1-60% w/w sodium hydroxide. In some preferred embodiments, said contacting is performed at a temperature of 10-200°C for a period of 10 minutes to 6 hours. In some preferred embodiments, said contacting is performed at a temperature of 10-200°C for a period of 10 minutes to 6 hours under a pressure of 0.1 to 5 MPa. In some preferred embodiments, said starting material comprises a mineral ore, soil, toxic waste, or dust produced through steelmaking processes. In some preferred embodiments, said starting material comprises dust produced by an electric arc furnace. In some preferred embodiments, said element is a metal. In some preferred embodiments, said element is selected from the group consisting of heavy metals, noble metals, platinum group metals, and toxic metals. In some preferred embodiments, said element is selected from the group consisting of Pb, Au, Cd, Zn, As, Ba, Cr, Hg, Se, Ag. Pt, Ti, V, Mo, Zr, and Pd. Some preferred embodiments further comprise the step of: recovering said solubilized element from said liquid extract. In some preferred embodiments, said recovery is achieved by precipitation of insoluble salts, electrowinning, or electrodeposition.

Another aspect of the present invention pertains to methods for the extraction of an element from a starting material comprising solids, said solids comprising said element, which method comprises the steps of: providing a liquid caustic solution; contacting said starting material with said caustic solution to form a mixture of solids and liquid, thereby chemically altering said solids; separating a solid residue from said mixture of solids and liquid, said solid residue containing said element; and recovering said element from said solid residue, characterized in that the liquid caustic solution is a liquid caustic silica solution.

As will become apparent, preferred features and characteristics of one aspect of the invention may be applicable to any other aspect of the invention.

DETAILED DESCRIPTION OF THE INVENTION

The present invention provides methods for the extraction and/or recovery of one or more elements, more preferably metals, still more preferably metals such as lead, gold, cadmium, and/or zinc, from starting materials containing those element(s). These methods all employ the step of chemically processing the starting material with a caustic silica solution. This processing step alters the starting material, thereby permitting certain elements to be solubilized or rendered more readily extracted using conventional processes, or both.

Without wishing to be bound to any particular theory, Applicant postulates that the processing step of the present invention chemically alters the bonds within the molecules and/or compounds of the material, thereby allowing certain elements, such as lead, gold, cadmium, and/or zinc, to be solubilized. In addition, Applicant postulates that the processing step of the present invention chemically alters the bonds within the molecules and/or compounds of the material, thereby allowing certain elements to be more accessible by conventional extraction processes. Applicant further postulates that certain atoms of particular elements are removed from the structure of the starting material, and the resulting vacancy within the structure satisfied with a replacement element. For example, a hazardous or toxic element (for example, lead) is removed from the molecular structure, and in other cases a valuable element (for example, noble metals such as gold), and is replaced by another element, preferably a non-hazardous, non-toxic, inexpensive element.

A. Caustic Silica Solution

The methods of the present invention all involve a chemical processing step which involves contacting the starting material with a caustic silica solution. The term "caustic silica solution" as used herein relates to a caustic aqueous solution (*i.e.*, an aqueous solution with a pH greater than about 8, more preferably greater than about 9, more preferably greater than about 10, still more preferably greater than about 11) in which silica (*i.e.*, $SiO_2$) has been dissolved.

Examples of caustic aqueous solutions include solutions of bases, including for example, solutions of strong Bronsted bases. Examples of such bases include alkali metal hydroxides, particularly sodium hydroxide (*i.e.*, NaOH) or potassium hydroxide (*i.e.*, KOH), and ammonia (*i.e.*, $NH_3$). Preferably, the caustic aqueous solution comprises sodium hydroxide.

Sodium hydroxide (*i.e.*, NaOH; ~40 grams/mole) is a water soluble hydroxide of an alkali metal, and is often referred to as a strong Bronsted base in aqueous solution. Another example of such an alkali hydroxide is potassium hydroxide (*i.e.*, KOH). At 25°C, the pH of an aqueous solution of NaOH may be approximated as pH ~ 14 + $\log_{10}$ [NaOH], where [NaOH] denotes the concentration of NaOH in units of moles per liter. An aqueous solution of NaOH with a concentration of 1.0 molar (*i.e.*, moles/liter) therefore has a pH of approximately 14; similarly, concentrations of 0.1, 0.01, 0.001. and 0.0001 molar NaOH yield approximate pH values of about 13, 12, 11, and 10, respectively. A 1.0 molar NaOH solution may be prepared by dissolving 1.0 mole of NaOH (*i.e.*, ~40 grams NaOH) in enough water to yield 1.0 liters of solution. In contrast, a 1.0 molal NaOH solution may be prepared by dissolving 1.0 mole of NaOH (*i.e.*, ~40 grams NaOH) in 1 kilogram of water. Concentrations are often described in units of percent weight by weight (*i.e.*, % w/w); for the purposes of this disclosure, a concentration so denoted is analogous to molality. For example, a 10% w/w NaOH aqueous solution may be prepared by dissolving 100 grams of NaOH (*i.e.*, ~2.5 moles) in 1000 grams of water.

Alkali metal hydroxides, such as sodium hydroxide and potassium hydroxide, may be obtained from a wide variety of commercial suppliers in various forms *(e.g.,* as a solid or an aqueous solution) and in various states of purity. Alkali metal hydroxides of moderate to high to very high purity may be used, provided the contaminants do not significantly interfere. Preferably, the purity is greater than 90%, more preferably greater than 95%, still more preferably greater than 97%, yet still more preferably greater than 99%.

Preferred caustic silica solutions which are useful in the practice of the present invention comprise NaOH in a concentration from about 1% w/w to about 60% w/w (with a resulting pH of about 12-16). In some preferred embodiments, caustic silica solutions comprise NaOH in a concentration from about 1% w/w to about 30% w/w (with a resulting pH of about 12-14), more preferably from about 5% w/w to about 25% w/w (with a resulting pH of about 13-14). The pH of the caustic silica solution may be measured using any known method, including, for example, optical *(e.g.,* colored pH indicators or pH test paper) or electrical (*e.g.,* electronic pH meters) methods. The pH of the caustic silica solution is preferably greater than about 10.3, more preferably greater than about 12, more preferably greater than about 13.

The caustic silica solutions useful in the practice of the present invention also comprise dissolved silica *(i.e.,* $SiO_2$). The physical and chemical properties of silica, also known as silicon dioxide, are variously described in the published literature; see, for example, <u>Kirk-Othmer Encyclopedia of Chemical Technology,</u> 3rd Edition (John Wiley & Sons, 1978), Vol. 20, pp. 748-781; and <u>The Chemistry of Silica,</u> by Ralph K. Iler (John Wiley & Sons, 1979), especially Chapter 1. Silica may be found in crystalline or amorphous forms, and the term "silica" is also often used to refer to silica which has been hydrated or hydroxylated to a greater or lesser degree; that is, to yield colloidal silica and silica gels. At ordinary temperatures, silica is chemically resistant to many common reagents. Common aqueous acids do not attack silica, except for hydrofluoric acid *(i.e.,* HF) which forms fluorosilicate ions *(i.e.,* $SiF_6^{-2}$). Different forms of silica have varying solubilities in water. For example, the solubility of quartz *(e.g.,* a crystalline silica) at room temperature is about 6 ppm reported as $SiO_2$ *(i.e.,* 0.1 mmol/kg), whereas the solubility of many amorphous silicas is somewhat larger, from about 80 to about 130 ppm reported as $SiO_2$ *(i.e.,* 1.4 to 2.2 mmol/kg). Silica solubility increases with temperature, approaching a maximum at about 200°C.

An aqueous solution in equilibrium with amorphous silica at ordinary temperatures contains monomeric monosilicic acid *(i.e.,* $Si(OH)_4$) also known as orthosilicic acid or silica hydrate (and is sometimes referred to as $H_4SiO_4$ or $H_2SiO_3$):

$$SiO_2 \text{ (s)} + H_2O \text{ (l)} \rightarrow H_2SiO_3 \text{ (aq)}$$

$$SiO_2 \text{ (s)} + 2 H_2O \text{ (l)} \rightarrow H_4SiO_4 \text{ (aq)}$$

This acid is dibasic, dissociating in two steps:

$$Si(OH)_4 + H_2O \rightarrow SiO(OH)_3^{-1} + H_3O^{+1} \quad pK_1 = 9.8 \text{ (20°C)}$$

$$SiO(OH)_3^{-1} + H_2O \rightarrow SiO_2(OH)_2^{-2} + H_3O^{+1} \quad pK_2 = 11.8 \text{ (20°C)}$$

The first conjugate base, $SiO(OH)_3^{-1}$, is known as metasilicic acid, and is sometimes also referred to as $H_3SiO_4^{-1}$ or $HSiO_3^{-1}$.

The solubility of amorphous silica appears to be a minimum at about pH 7 and increases markedly above pH 9. Below pH 9, the solubility is independent of pH; above pH 9, the solubility increases because of increased ionization of silicic acid. Above pH 9, species such as $H_3SiO_4^{-1}$ and the dimers $Si_2O_2(OH)_5^{-1}$ and $Si_2O_3(OH)_4^{-2}$ are important. Above pH 11, species such as $H_2SiO_4^{-2}$ and the dimers $Si_2O_4(OH)_3^{-3}$ are important. For example, the solubility of amorphous silica at 25°C is reported as 138, 180, 310, and 876 ppm (reported as $SiO_2$) for pH values of 9, 9.5, 10, and 10.6, respectively.

Dissolved silica may be precipitated from a saturated or supersaturated solution to form amorphous silica, or it may undergo polymerization to give discrete particles which associate to give chains and networks, such as gels, or which grow in size and decrease in number to yield sols, such as colloidal silica. The rates of precipitation and polymerization are dependent on pH and salt concentration.

Preferred caustic silica solutions which are useful in the practice of the present invention comprise dissolved silica. Preferred caustic silica solutions comprise dissolved silica in a concentration from about 0.001% to about 5% w/w (about 10 ppm to about 50,000 ppm), more preferably from about 0.001% to about 1% w/w (about 10 ppm to about 10,000 ppm), more preferably from about 0.01% to about 0.5% w/w (about 100 ppm to about 5,000 ppm), even more preferably about 0.1% w/w (about 1000 ppm). In this context, units of ppm are related to units of % w/w by the equation: (ppm) = (% w/w) x (10,000). For example, a 1000 ppm $SiO_2$ or 0.1% w/w $SiO_2$ aqueous solution may be prepared by dissolving 1 gram of $SiO_2$ *(i.e.,* 0.0167 moles) in 1000 grams of water.

Silica may be obtained from a wide variety of commercial suppliers, usually as the solid, in various forms and various states of purity. Preferably, the caustic silica solutions useful in the present invention are prepared using amorphous silica. Preferably, the purity of the silica is greater than 90%, more preferably greater than 95%, still more preferably greater than 97%, yet still more preferably greater than 99%.

In order to prevent or minimize contamination and/or interference by adventitious components, the caustic silica solutions for use in the present invention are preferably prepared using purified water, such as distilled water, more preferably deionized distilled water.

The caustic silica solutions of the present invention may be prepared by any of a variety of known methods. For example, one part by weight of high purity, dry sodium hydroxide may be mixed with one part by weight of high purity, dry silica and three parts by weight of distilled deionized water in a suitable container such as a glass beaker or stainless steel vessel. To expedite preparation of the caustic silica solution, the mixture may be heated, for example, to approximately 100°C, using known means, for example, a hot plate, and stirred occasionally or continuously using known means, for example, a mechanical paddle or magnetic stirring bar; it may then be desirable to add purified water to the mixture, as needed, to maintain the original volume. So treated, a suitable caustic silica solution may be obtained after a period of about 30 minutes to about 4 hours. If the solution was heated during preparation, it may be desirable to allow it to cool to room temperature. It may be preferred to filter the solution using any suitable known means to remove some or all of any remaining undissolved material, for example, undissolved silica. For example, the cool solution may be filtered through Whatman® Filter Paper #1 using a water aspirated Buchner funnel. If desired, the concentration of dissolved silica may be determined using known methods, for example, atomic absorption or colorimetric analysis using a molybdic acid reagent.

For caustic silica solutions possessing relatively high concentrations of silica (e.g., approaching 1%), the presence of dissolved silica may be verified by titration with a suitable acid, such as hydrochloric acid (i.e., HCl), to a pH of about 4-6, causing the dissolved silica to polymerize; the solution becomes cloudy and a silica gel forms.

The caustic silica solution is preferably stored in an airtight container, so as to prevent degradation, for example, by adventitious carbon dioxide (i.e., $CO_2$, which dissolves to form carbonic acid, $H_2CO_3$, and may react with and thereby neutralize dissolved NaOH to form water and $Na_2CO_3$). The caustic silica solution is preferably stored in an inert. or relatively inert, container. For long term storage, materials such as glass should be avoided; instead plastic containers, such as polyethylene bottles or barrels, are preferred. So stored, the caustic silica solutions are stable for a period of at least several months.

## B. Use of the Caustic Silica Solution

The methods of the present invention all involve a chemical processing step which involves contacting the starting material with a caustic silica solution.

The starting material may be contacted with the (liquid) caustic silica solution by simple mixing. If the starting material is a solid, or contains solid materials, a slurry of starting material and caustic silica solution may be prepared. Suitable proportions of starting material to caustic silica solution may easily be determined by the skilled artisan. For solid starting materials, such as soils, enough caustic silica solution may be added to form a slurry with acceptable handling properties, such as consistency and flow properties. For example, for a soil sample, proportions of approximately 5 liters of caustic silica solution per kilogram of soil may be appropriate. For more dense materials, such as crushed ores, proportions of approximately 10 liters of caustic silica solution per kilogram of material may be appropriate.

Once combined, the mixture may be allowed to stand undisturbed or it may be further mixed, stirred, or agitated. The mixture may be maintained at a temperature of from about 10 to about 200°C. In some preferred embodiments, the mixture is maintained at room temperature; in others, the mixture is heated. In some preferred embodiments, the mixture is heated and pressurized, for example, at a pressure of about 1 to 50 atmospheres (i.e., about 0.1 to 5 MPa). Once combined, chemical processing may continue for a period of minutes to days, more preferably for a period from about 10 minutes to about 6 hours, still more preferably for a period of about 1.5 hours.

After the desired period for chemical processing with the caustic silica solution, the mixture may be further processed by well known standard means. For example, the solids of the mixture are separated from the liquid of the mixture. Typically, the mixture is filtered to remove the solids (i.e., treated material, solid residue) and yield a filtrate (i.e., extract, liquid extract). Any suitable filtration or separation method may be used. For example, the mixture may be filtered through a filter media, such as a filter paper or filter pad. Alternatively, the mixture may be separated by mechanical means, for example, centrifugation.

The methods of the present invention all involve a chemical processing step which chemically alters the starting material. In some instances, elements in the starting material are solubilized. In other instances, elements remain in the residue, but are rendered more exposed and therefore more readily extracted using conventional processes.

For example, chemical processing of a lead-containing material with a caustic silica solution causes a large portion of the lead to be solubilized (i.e., placed in solution). Similarly, chemical processing of a gold-containing material causes a large proportion of the gold to be solubilized. A solubilized element may be present in solution as a neutral element or as a charged ionic species, and may further be solvated, chelated or otherwise complexed by solvent, chelating agents, or complexing agents also present.

Once solubilized, the extracted elements can be removed from the extract solution using known methods. For example, dissolved elements, such as lead in the ionic form, $Pb^{+2}$, may be removed by precipitation in the form of an insoluble (or sparingly soluble) salt, for example, lead sulfate (i.e., $PbSO_4$), by adding a suitable soluble salt, for example, a sulfate such as sodium sulfate (i.e., $Na_2SO_4$). The solubility product of lead sulfate is approximately 1.06 x $10^{-8}$ at 18°C; the solubility in water is therefore about $10^{-4}$ moles per liter. Thus, by adding sodium sulfate until further precipitation is minimal, the residual lead ion concentration will be substantially reduced.

In an alternative process. a solubilized species, such as the lead ion (i.e., $Pb^{+2}$), may be removed from the extract solution using an electrowinning process. for example, by electrolyzing the solution, or by adding another material with a standard electrode potential more negative than the standard electrode potential of the metal to be precipitated.

For example, the standard electrode potential for lead *(i. e.,* $Pb^{+2} + 2e^{-1} \rightarrow Pb$) at 25°C (as measured versus a normal hydrogen electrode) is E° = -0.1263 Volts whereas the standard electrode potential for aluminum (*i.e.,* $Al^{+3} + 3e^{-1} \rightarrow Al$) at 25°C (as measured versus a normal hydrogen electrode, in 0.1 M NaOH) is E° = -1.706 Volts. See, for example, Millazzo and Caroli, <u>Tables of Standard Electrode Potentials,</u> Wiley-Interscience, New York, 1977. The electrode potential for aluminum is more negative than the electrode potential for lead (even at low lead ion concentrations). Thus aluminum metal will reduce lead ion according to the reaction $3Pb^{+2} + 2Al \rightarrow 3\,Pb + 2Al^{+3}$, the lead ion will precipitate as lead metal (often in the form of a sponge-like material) and the aluminum metal will be solubilized as aluminum ions. For optimal electrowinning, the aluminum metal is preferably powdered or otherwise divided, so as to promote reaction. Other materials with suitable electrode potentials may also be used. For example, the standard electrode potential for manganese (*i.e.,* $Mn^{+2} + 2e^{-1} \rightarrow Mn$) at 25°C (as measured versus a normal hydrogen electrode) is E° = -1.029 Volts, and may be predicted to be useful for electrowinning lead ions from solution.

Similarly, the standard electrode potential for the gold(I) ion *(i.e.,* $Au^{+1} + e^{-1} \rightarrow Au$) at 25°C (as measured versus a normal hydrogen electrode) is E° = +1.68 Volts and the standard electrode potential for the gold(III) ion (*i.e.,* $Au^{+3} + 2e^{-1} \rightarrow Au^{+1}$) at 25°C (as measured versus a normal hydrogen electrode) is E° = +1.29 Volts. The electrode potential for aluminum is more negative than the electrode potentials for gold (even at low gold ion concentrations). Thus aluminum metal will reduce gold ions, which will precipitate as gold metal as the aluminum metal is solubilized as aluminum ions.

Also, the standard electrode potential for the zinc (*i.e.,* $Zn^{+2} + 2e^{-1} \rightarrow Zn$) at 25°C (as measured versus a normal hydrogen electrode) is E° = -0.763 Volts, and may be predicted to be useful for electrowinning lead ions and/or gold ions from solution.

The methods of the present invention permit the extraction and/or recovery of elements from starting materials such as mineral ores, recyclable wastes, contaminated soils, toxic wastes *(e.g.,* listed and/or characteristic toxic wastes), and other materials. An example of a toxic waste is dust produced through steelmaking processes (such as electric arc furnace dusts and BOP dusts).

The methods of the present invention may permit the extraction and/or recovery of elements, more preferably metals, still more preferably heavy metals (*i.e.,* metals with specific gravity of about 5.0 $g/cm^3$ or higher, such as chromium, vanadium, molybdenum, zirconium, zinc), noble metals (*e.g.,* gold, silver, platinum), platinum group metals (*e.g.,* platinum, palladium, nickel) group metals, and toxic metals (*e.g.,* aluminum, cadmium, arsenic, lead, silver, mercury, barium, selenium), and other metals (*e.g.,* titanium).

<u>C. Examples</u>

Several examples of the methods of the present invention are illustrated in the following examples. Note that a number of the standardized methods for sample preparation and analysis are briefly described in the section following the Examples.

<u>Example 1:</u>

<u>Lead Spiked ERA Soil Sample</u>

A standard soil sample, ERA 0525-95-04-Pb, was obtained from Environmental Resource Associates® (Arvada, Colorado) with a certified spiked lead (Pb) concentration of 19,300 mg/kg. This standard was subsequently prepared in accordance with method ILMO 4.0 and was analyzed in accordance with method EPA 6010A (by Professional Service Industries, Inc., a certified analytical laboratory). The analysis indicated a lead concentration of 19,600 mg/kg (minimum detectable limit of 2 mg/kg).

A caustic silica solution was prepared by combining 340 grams of sodium hydroxide (NaOH; ~100% purity; Red Devil Lye®, Reckitt & Colman® Inc.), 1020 grams of distilled deionized water (from Barnstead Water Purifier®), and 340 grams of silica ($SiO_2$; 99.623%; Unimin® Corp.; +325 mesh). The mixture was stirred constantly for 6 hours while maintained at 220°F (105°C). The mixture was filtered through Whatman® No. 1 filter paper; the residue was discarded and the resulting filtrate was used as the caustic silica solution.

To 125.00 grams of the standard soil sample (which without pre-treatment is expected to yield 2,450 mg Pb) was added 150 mL of the above caustic silica solution, and the mixture allowed to stand at room temperature for 1.5 hours with occasional stirring. The mixture was filtered using Whatman® #41 (25-30 μm) filter paper. An additional 300 mL of near boiling water was filtered through the same filter and into the same flask (first rinse), and a further 180 mL of near boiling water was filtered through the same filter and into the same flask (second rinse), for a total combined filtrate/rinsate volume of 610 mL.

A sample of the filtered residue (1.00 gram, after drying) was prepared in accordance with method EPA CLP ILMO 4.0 and analyzed in accordance with method EPA 6010A; the analysis indicated a lead concentration of 2,960 mg/kg. Thus, pre-treatment with the caustic silica solution reduced the lead content from 19,600 mg/kg to 2,960 mg/kg; that is, by 85%.

To the filtrate/rinsate was added 1.50 grams of aluminum powder (Al; 99.8%; -40 + 325 mesh; Johnson & Matthey®), and the mixture filtered through Whatman® #41 filter paper. The residue was discarded. A 100 mL aliquot of the resulting filtrate was prepared in accordance with method EPA CLP ILMO 4.0 and analyzed in accordance with method EPA 6010A (also by Professional Service Industries, Inc., a certified analytical laboratory). The analysis indicated a lead concentration of 125 mg/L.

As can be readily seen from these data, the lead content of the starting material (*i.e.,* the spiked soil sample) was substantially reduced by treatment with the caustic silica solution. This example demonstrates that a specific amount of lead in a soil sample (as spiked by the ERA and as supported by subsequent analysis) was removed from the soil sample and solubilized by treatment with the caustic silica solution, as described above. This example also demonstrates that the solubilized lead, once in solution, was subsequently precipitated from solution by treatment with aluminum metal.

Example 2

Cadmium Spiked ERA Soil Sample

Another standard soil sample, ERA 0525-95-04-Cd, was obtained from Environmental Resource Associates® (Arvada, Colorado) with a certified spiked cadmium (Cd) concentration of 14,700 mg/kg. This standard was prepared in accordance with method EPA CLP ILMO 4.0 and analyzed in accordance with method EPA 6010A (by Professional Service Industries, Inc., a certified analytical laboratory). The analysis indicated a cadmium concentration of 16,700 mg/kg (minimum detection limit of 0.2 mg/kg).

To 125.00 grams of the standard soil sample (which without pre-treatment is expected to contain 2088 mg Cd) was added 150 mL of the caustic silica solution described in Example 1, and the mixture allowed to stand at room temperature for 1.5 hours with occasional stirring. The mixture was filtered using Whatman® #41 (25-30 μm) filter paper. An additional 150 mL of near boiling water was filtered through the same filter and into the same flask, for a total combined filtrate/rinsate volume of 270 mL.

A sample of the filtered residue (1.00 gram, after drying) was prepared in accordance with method EPA CLP ILMO 4.0 and analyzed in accordance with method EPA 6010A. The analysis indicated a cadmium concentration of 14.400 mg/kg. Thus, pre-treatment had reduced the cadmium content from 16,700 mg/kg to 14,400 mg/kg; that is, by 14%.

To the filtrate/rinsate was added 1.50 grams of aluminum powder (Al; 99.8%; -40 + 325 mesh; Johnson & Matthey®). A precipitate was observed. The mixture of solution and precipitate was heated gently to aid in filtration. The temperature did not exceed 90°C at any time. The mixture was filtered through Whatman® #41 filter paper. The residue was discarded. A 100 mL aliquot of the resulting filtrate was prepared in accordance with method EPA CLP ILMO 4.0 and analyzed in accordance with method EPA 6010A (also by Professional Service Industries, Inc., a certified analytical laboratory). The analysis indicated a cadmium concentration of 1.12 mg/L.

As can be readily seen from these data, the cadmium content of the starting material (*i.e.,* the spiked soil sample) was notably reduced by treatment with the caustic silica solution. This example demonstrates that a specific amount of cadmium in a soil sample (as spiked by the ERA and as supported by subsequent analysis) was removed from the soil sample and solubilized by treatment with the caustic silica solution, as described above. This example also demonstrates that the solubilized cadmium, once in solution, was subsequently precipitated from solution by treatment with aluminum metal.

Example 3

Baghouse Material

A 1.00 grams sample of baghouse material was prepared according to method EPA 3050A, and analyzed according to method EPA 6010A (by Professional Service Industries, Inc., a certified analytical laboratory). Another 0.2 gram sample was prepared and analyzed (for mercury) in accordance with method EPA 7471A (using standard cold vapor atomic absorption methods). The results are reported in Table 1.

A caustic silica solution was prepared by combining 340 grams of sodium hydroxide (NaOH; ~100%; Red Devil Lye®, Reckitt & Colman® Inc.), 1020 grams of distilled deionized water (from Barnstead Water Purifier®), and 340 grams of silica ($SiO_2$; 99.623%; Unimin® Corp.; +325 mesh). The mixture was stirred constantly for 6 hours at 220°F (105°C). The mixture was filtered through Whatman® No. 1 filter paper; the residue was discarded and the resulting filtrate was used as the caustic silica solution.

A 125 gram sample of the same baghouse material was mixed with 500 mL of the above caustic silica solution for 2 hours at 220°F. The mixture was filtered through Whatman® No. 1 filter paper. An additional 500 mL of near boiling water was filtered through the same filter and into the same flask, for a total combined filtrate/rinsate volume of ~1000 mL. A 1.00 gram sample of residue (after drying) was prepared according to method EPA 3050A, and analyzed according to method EPA 6010A (by Professional Service Industries, Inc., a certified analytical laboratory). Another 0.2 gram sample was prepared and analyzed (for mercury) in accordance with method EPA 7471A (using standard cold vapor atomic absorption methods). The results are summarized in Table 1.

A 100 mL aliquot of the resulting filtrate was prepared according to method EPA 3010 and analyzed in accordance with method EPA 6010A (also by Professional Service Industries, Inc., a certified analytical laboratory), and the results are summarized in Table 1.

This example demonstrates that the amounts of various metals in the untreated sample were altered (either increased or decreased) in the wash residue, as detected by identical standard methods. As can readily be seen from the data, treatment with the caustic silica solution resulted in an increase in detectable metals in the residue in every case except for lead and selenium. The detectable content of barium rose from 295 mg/kg to 4,900 mg/kg; that is, by a factor of almost 17. The detectable content of cadmium, chromium, and silver increased by a factor of about 2. In contrast, pre-treatment reduced the amount of detectable lead in the residue, from 14,600 mg/kg to 4,230 mg/kg; that is, by about 71%. This lead was rendered soluble and was detected in the filtrate. Similarly, pre-treatment reduced the amount of detectable selenium in the residue, from 172 mg/kg to 167 mg/kg; that is, by about 3%. This selenium was rendered soluble and was detected in the filtrate.

TABLE 1 -

| Example 3: Baghouse Material | | | | |
|---|---|---|---|---|
| Metal | Baghouse Dust (mg/kg) | Residue Following Rinse (mg/kg) | Factor Increase (Decrease) | Filtrate (mg/L) |
| Arsenic | 2050 | 2490 | 1.21 | 279 |
| Barium | 295 | 4900 | 16.6 | 0.295 |
| Cadmium | 892 | 1680 | 1.88 | 3.32 |
| Chromium | 468 | 862 | 1.84 | 0.75 |
| Lead | 14600 | 4230 | (0.29) | 2,990 |
| Mercury | 0.71 | 2.03 | 2.85 | <0.01 |
| Selenium | 172 | 167 | (0.97) | 27.2 |
| Silver | 24.5 | 53.4 | 2.18 | <0.03 |

Example 4

California Head Ore

A caustic silica solution was prepared by combining 340 grams of sodium hydroxide (NaOH; ~100%; Red Devil Lye®, Reckitt & Colman® Inc.), 1020 grams of distilled deionized water (from Barnstead Water Purifier®), and 340 grams of silica ($SiO_2$; 99.623%; Unimin® Corp.; +325 mesh). The mixture was stirred continuously for 6 hours at 220°F (105°C). The mixture was filtered through Whatman® No. 1 filter paper; the residue was discarded and the resulting filtrate was used as the caustic silica solution.

A sample of 454 gram of California Head Ore was split into two equal portions of 227 grams each. One of the portions was used for all tests on the untreated California Head Ore.

A 10 gram sample of untreated California Head Ore was "fired" in a standard gas fire assay furnace by American Assay Lab and analyzed for gold, silver, platinum, and palladium. These results are summarized in Table 2. A 1.00 gram sample of California Head Ore was prepared according to method EPA 3050A, and analyzed according to method EPA 6010A (by American Assay Lab, a certified analytical laboratory). A small portion of the sample was prepared and analyzed (for mercury) in accordance with method EPA 7471A (using standard cold vapor atomic absorption methods). The results are reported in Table 2.

An additional 10 grams of untreated California Head Ore was sent to the MacKay School of Mines in Reno, Nevada for "firing" in an induction furnace at the same temperature used in the standard gas fire assay furnace. The sample was then sent back to American Assay Lab for analysis of gold content, using standard flame atomic absorption methods. These results are summarized in Table 2.

The remaining 227 gram portion of California Head Ore was mixed with 1000 mL of the above caustic silica solution for 3 hours at 90°C. The mixture was filtered through Whatman® No. 1 filter paper, and the "wash" filtrate collected (designated as "filtrate A"). An additional 1000 mL of near boiling water was filtered through the same filter and into a different flask, and the "rinse" filtrate collected (designated "filtrate B"). To each of the wash and rinse filtrates was added 0.5 grams of aluminum powder (Al; 99.8%; -40 + 325 mesh; Johnson & Matthey). A precipitate was observed in both cases. The mixtures were filtered through Whatman® No. 1 filter paper, and the residues (from wash "filtrate A" and rinse "filtrate B") were collected, and dried. The collected residue (aluminum precipitate) from the wash filtrate (designed as "Al precipitate A") weighed 17 grams. The collected residue (aluminum precipitate) from the rinse filtrate (designated as "Al precipitate B") weighed 13 grams.

An 8 gram sample of residue ("Al precipitate A") was "fired" in a standard gas fire assay furnace by American Assay Lab and analyzed for gold, silver, platinum, and palladium. These results are summarized in Table 2. A 1 gram sample of residue ("Al precipitate A") was prepared according to method EPA 3050A. and analyzed according to method EPA 6010A (by American Assay Lab, a certified analytical laboratory). A small portion of the sample was prepared and analyzed (for mercury) in accordance with method EPA 7471A (using standard cold vapor atomic absorption methods). Results for eight metals are reported in Table 2.

The remaining 8 gram of residue ("Al precipitate A") was sent to the MacKay School of Mines in Reno, Nevada for "firing" in an induction furnace at the same temperature used in the standard gas fire assay furnace. The sample was then sent back to American Assay Lab for analysis of gold content, using standard flame atomic absorption methods. These results are summarized in Table 2.

A 6 gram sample of residue ("Al precipitate B") was "fired" in a standard gas fire assay furnace by American Assay Lab and analyzed for gold, silver, platinum, and palladium. These results are summarized in Table 2. A 1 gram sample of residue ("Al precipitate B") was prepared according to method EPA 3050A, and analyzed according to method EPA 6010A (by American Assay Lab, a certified analytical laboratory). A small portion of the sample was prepared and analyzed (for mercury) in accordance with method EPA 7471A (using standard cold vapor atomic absorption methods). Results for eight metals are reported in Table 2.

The remaining 6 gram of residue ("Al precipitate B") was sent to the MacKay School of Mines in Reno, Nevada for "firing" in an induction furnace at the same temperature used in the standard gas fire assay furnace. The sample was then sent back to American Assay Lab for analysis of gold content, using standard flame atomic absorption methods. These results are summarized in Table 2.

This example demonstrates that various metals/elements were extracted from the ore sample and solubilized by treatment with the caustic silica solution, as described above, and that the solubilized metals/elements were subsequently precipitated from solution by treatment with aluminum metal, as described above. Treatment with the caustic silica solution effectively exposed metals, particularly gold and lead, and allowed them to be solubilized to thereby permit subsequent precipitation.

TABLE 2 -

| Example 4: California Head Ore | | | | | | |
|---|---|---|---|---|---|---|
| | Fired in Standard Gas Furnace | | | Fired in Induction Furnace | | |
| | Untreated Head Ore | Al Prec. A | Al Prec. B | Untreated Head Ore | Al Prec. A | Al Prec. B |
| Metal | mg/kg | mg/kg | mg/kg | mg/kg | mg/kg | mg/kg |
| Gold | 0.069 | 0.63 | 0.53 | 0.068 | 0.41 | 0.21 |
| Platinum | <0.05 | <0.05 | <0.05 | - | - | - |
| Palladium | <0.05 | <0.05 | <0.05 | - | - | - |
| Arsenic | <0.10 | 3.6 | 8.6 | - | - | - |
| Barium | 69 | 45 | 35.8 | - | - | - |
| Cadmium | 8.33 | 0.59 | 0.1 | - | - | - |
| Chromium | 68 | 12.8 | 11.2 | - | - | - |
| Lead | 16 | 2.29% | 2.03% | - | - | - |

TABLE 2 -   (continued)

| Example 4: California Head Ore | | | | | | |
|---|---|---|---|---|---|---|
| | Fired in Standard Gas Furnace | | | Fired in Induction Furnace | | |
| | Untreated Head Ore | Al Prec. A | Al Prec. B | Untreated Head Ore | Al Prec. A | Al Prec. B |
| Metal | mg/kg | mg/kg | mg/kg | mg/kg | mg/kg | mg/kg |
| Mercury | <0.10 | 0.30 | <0.10 | - | - | - |
| Selenium | 14 | 4.0 | 3.1 | - | - | - |
| Silver | 0.4 | 0.90 | 1.4 | - | - | - |
| Aluminum | 9,240 | 9.68% | 9.85% | - | - | - |

Example 5

Electric Arc Furnace (EAF) Baghouse Dust

This example provides a comparison between the methods of the present invention, which employ a caustic silica solution, and a control method, which uses an analogous solution that lacks dissolved silica.

A concentrated caustic silica solution (referred to herein as "FGC") was prepared by combining 750.0 grams of sodium hydroxide (NaOH; ~100%; Red Devil Lye®, Reckitt & Colman® Inc.), 1509.4 grams of purified water, and 198.3 grams of silica ($SiO_2$; 99.623%; Unimin-Silex® Corp.; +325 mesh) in a 4.0 L glass beaker. The mixture/slurry. was stirred continuously using a motorized mechanical stirrer for 4 hours at 20∓2°C. The mixture was filtered through a cloth coffee filter and Whatman® No. 1 filter paper. The residue was discarded and the resulting filtrate (FGC) was collected and stored in a plastic container. This concentrated caustic silica solution had a NaOH concentration of ~50% w/w. A 125 mL aliquot of this solution was analyzed (using ICP) for metal content and the data are summarized below in Table 3.

As a control, a concentrated sodium hydroxide solution (referred to herein as "SHC") was prepared by combining 750.2 grams of sodium hydroxide (NaOH; ~100% ; Lewis Red Devil Lye®, Reckitt & Colman® Inc.) and 1508.8 grams of purified water in a 4.0 L glass beaker. The resulting liquid (SHC) was collected and stored in a plastic container. This concentrated sodium hydroxide solution had a NaOH concentration of ~50% w/w. A 125 mL aliquot of this solution was analyzed (using ICP) for metal content and the data are summarized below in Table 3.

A dilute caustic silica solution (referred to herein as "FGD") was prepared by diluting 126.4 grams of the concentrated caustic silica solution, FGC, with 1877.2 grams of water in a 2.0 L glass beaker. The resulting solution (FGD) was stored in a plastic container. This dilute caustic silica solution had a NaOH concentration of ~3% w/w. A 125 mL aliquot of this solution was analyzed (using ICP) for metal content and the data are summarized below in Table 3.

As a control, a dilute sodium hydroxide solution (referred to herein as "SHD") was prepared diluting 126.4 grams of the concentrated caustic silica solution, SHC, with 1877.2 grams of water in a 2.0 L glass beaker. The resulting liquid (SHD) was stored in a plastic container. This dilute sodium hydroxide solution had a NaOH concentration of ~3%. A 125 mL aliquot of this solution was analyzed (using ICP) for metal content and the data are summarized below in Table 3.

The test material used in this example was baghouse dust (also known as Electric Arc Furnace or EAF dust, listed as K061 waste, and referred to herein as "BHD") and was obtained from GST Steel Company®, Kansas City, Missouri, USA. Prior to use, the BHD was dried to constant weight in air in an oven at 105°C. A 1 gram aliquot of this test material was analyzed (using ICP) for metal content and the data are summarized below in Table 3.

A 100.0 gram sample of dry baghouse dust, BHD, was mixed with 1000.1 grams of dilute caustic silica solution, FGD, in a 2.0 L beaker and stirred for 45 minutes at 20°C. The resulting slurry was filtered under vacuum using a water aspirated Buchner funnel using Whatman® No. 42 filter paper. Approximately 940 mL of filtrate (referred to herein as "FGD-X") was collected, and the remaining filtrate was discarded. A 125 mL aliquot of this solution was collected for laboratory analysis and a 10 mL sample was analyzed (using ICP) for metal content; the data are summarized below in Table 3.

The weight of the wet residue (referred to herein as "BHD-FGD") was 138.5 grams. A 10.6 gram aliquot of this residue was collected as a sample from which a 1.0 gram sample was analyzed (using ICP) for metal content; the data are summarized below in Table 3. Since the wet residue weighed 138.5 grams and was obtained from 100.0 grams of dry material, the 10.6 gram aliquot was calculated to have a dry weight of approximately (100.0/138.5)x(10.6) = 7.65 grams. The remaining wet residue was thus calculated to have a dry weight of approximately 100.0-7.65 = 92.35 grams.

The remaining wet residue, BHD-FGD, calculated to have a dry weight of 92.35 grams, was mixed with 926.4 grams of concentrated caustic silica solution, FGC, in a 2.0 L glass beaker and mixed at room temperature with a motor driven mechanical stirrer. The estimated total volume of the slurry was 745 mL. The slurry was loaded into the reaction vessel of a 1.0 L autoclave (from Autoclave Engineers®) using a funnel. The autoclave was equipped with: a variable-speed belt-driven motor used for mechanical stirring and agitation; top venting ports for venting and loading samples; a bottom venting port for unloading samples; a pressure release valve; a heating coil controlled by a variac and a built-in thermocouple; a second calibrated thermocouple for measuring the temperature in the reaction vessel located at the center-interior of the vessel; and cooling coils for rapid cooling and control of the reaction vessel temperature. The slurry was stirred at a rate of approximately 60 cycles/minute throughout loading. reaction, and unloading. The temperature of the slurry was raised to an operating temperature of about 145 ∓ 5°C within about 30 minutes and maintained at that temperature for approximately 60 minutes. A slight pressure buildup was observed when the temperature exceeded 150°C. Following reaction, the slurry was rapidly cooled to a temperature less than 100°C and the slurry drained into a 2.0 L glass beaker. The slurry was filtered under vacuum using a water aspirated Buchner funnel using a cloth coffee filter and Whatman® No. 42 filter paper, and the filtrate (referred to herein as "FGC-X") was collected. A 125 mL aliquot of this solution was collected for laboratory analysis and a 10 mL sample analyzed (using ICP) for metal content; the data are summarized below in Table 3.

The wet residue (referred to herein as "BHD-FGC") was collected and a 1.0 gram sample analyzed (using ICP) for metal content; the data are summarized below in Table 3.

TABLE 3 -

| | Example 5: Electric Arc Furnace Baghouse Dust (Caustic Silica Solution) | | | | | | |
|---|---|---|---|---|---|---|---|
| Metal | BHD (mg/kg) | BHD-FGD (mg/kg) | FGD (mg/L) | FGD-X (mg/L) | BHD-FGC (mg/kg) | FGC (mg/L) | FGC-X (mg/L) |
| Al | 3,790 | 3,690 | 1.8 | 2.3 | 2640 | 36.4 | 211 |
| As | 0 | 0 | 0.1 | 0.0 | 0 | 1.1 | 0.7 |
| Ba | 294 | 279 | 0.2 | 1.4 | 302 | 0.8 | 0.7 |
| Cd | 412 | 410 | 0.0 | 0.0 | 382 | 0.0 | 14.4 |
| Cr | 1,190 | 1,120 | 0.0 | 3.2 | 1290 | 0.0 | 0.0 |
| Cu | 1,910 | 1,900 | 0.1 | 0.1 | 1380 | 0.0 | 74.7 |
| Fe | 229,000 | 217,000 | 0.9 | 1.2 | 241,000 | 13.4 | 84.2 |
| Pb | 18,600 | 12,400 | 0.0 | 560 | 1,800 | 1.3 | 1,510 |
| Ni | 180 | 172 | 0.0 | 0.0 | 257 | 0.0 | 0.0 |
| Se | 156 | 115 | 0.0 | 0.1 | 95 | 0.0 | 0.0 |
| Ag | 53 | 49 | 0.0 | 0.0 | 62 | 0.0 | 0.0 |
| Na | 6,720 | 5,930 | 10,300 | 11,900 | 38,800 | 240,000 | 276,000 |
| Zn | 244,000 | 241,000 | 0.9 | 144 | 83,000 | 7.3 | 21,400 |

As can be seen from the data summarized in Table 3, treatment with a caustic silica solution reduced the lead (*i.e.,* Pb) content of the test material from 18,600 mg/kg (BHD) to 12,400 mg/kg (BHD-FGD) to 1,800 mg/kg (BHD-FGC); that is, to a value of about 9.7% of the original value (a 90.3% reduction). Similarly, treatment with a caustic silica solution reduced the zinc (*i.e.,* Zn) content of the test material from 244,000 mg/kg (BHD) to 241,000 mg/kg (BHD-FGD) to 83,000 mg/kg (BHD-FGC); that is, to a value of about 34% of the original value (a 66% reduction).

In a control experiment, a 100.0 gram sample of dry baghouse dust, BHD, was mixed with 1000.8 grams of dilute sodium hydroxide solution, SHD, in a 2.0 L beaker and stirred to 45 minutes at 20°C. The resulting slurry was filtered under vacuum a water aspirated Buchner funnel using Whatman® No. 42 filter paper. Approximately 960 mL of filtrate (referred to herein as "SHD-X") was collected. A 125 mL aliquot ofthis solution was collected and a 10 mL sample analyzed (using ICP) for metal content; the data are summarized below in Table 4.

The weight of the wet residue (referred to herein as "BHD-SHD") was 123.0 grams. A 10.8 gram aliquot of this residue was collected and a 1.0 gram sample analyzed for metal content; the data are summarized below in Table 4. Since the wet residue weighed 123.0 grams and was obtained from 100.0 grams of dry material, the 10.8 gram aliquot was calculated to have a dry weight of approximately (100.0/123.0)x(10.8) = 8.78 grams. The remaining wet residue was thus calculated to have a dry weight of approximately 100.0-8.78 = 91.22 grams.

The remaining wet residue, BHD-SHD, calculated to have a dry weight of 91.22 grams, was mixed with 917.2 grams of concentrated sodium hydroxide solution, SHC, in a 2.0 L glass beaker and mixed at room temperature with a motor driven mechanical stirrer. The slurry was loaded into the reaction vessel of a 1.0 L autoclave (from Autoclave Engineers®, described above) using a funnel. The slurry was stirred at a rate of approximately 60 cycles/minute throughout loading, reaction, and unloading. The temperature of the slurry was raised to an operating temperature of about 140 ∓ 5°C within about 50 minutes and maintained at that temperature for approximately 60 minutes. A slight pressure buildup was observed when the temperature exceeded 150°C. Following reaction, the slurry was rapidly cooled to a temperature less than 100°C and the slurry. drained into a 2.0 L glass beaker. The slurry, having an approximate volume of 740 mL. was filtered under vacuum a water aspirated Buchner funnel using a cloth coffee filter and Whatman® No. 42 filter paper, and the filtrate (referred to herein as "FGC-X") was collected. A 125 mL aliquot of this solution was collected and a 10 mL sample analyzed for metal content: the data are summarized below in Table 4.

The wet residue (referred to herein as "BHD-SHC") was washed with approximately 1 L of purified water and dried overnight at 105°C. The entire recoverable amount was collected as a sample and a 1.0 gram sample of the dried residue was analyzed (using ICP) for metal content; the data are summarized below in Table 4.

TABLE 4 -

| Example 5: Electric Arc Furnace Baghouse Dust (Control) | | | | | | | |
|---|---|---|---|---|---|---|---|
| Metal | BHD (mg/kg) | BHD-SHD (mg/kg) | SHD (mg/L) | SHD-X (mg/L) | BHD-SHC (mg/kg) | SHC (mg/L) | SHC-X (mg/L) |
| Al | 3,790 | 4,200 | 0.3 | 0.6 | 3,280 | 1.9 | 113.0 |
| As | 0 | 0 | 0.1 | 0.0 | 0 | 0.0 | 1.5 |
| Ba | 294 | 273 | 0.1 | 2.4 | 327 | 0.0 | 0.8 |
| Cd | 412 | 380 | 0.0 | 0.1 | 524 | 0.0 | 1.8 |
| Cr | 1,190 | 1,160 | 0.0 | 3.3 | 1,690 | 0.0 | 0.0 |
| Cu | 1,910 | 1,820 | 0.0 | 0.2 | 1,700 | 0.0 | 34.7 |
| Fe | 229,000 | 219,000 | 0.2 | 0.6 | 297,000 | 0.3 | 9.9 |
| Pb | 18,600 | 9,400 | 0.2 | 776 | 1,820 | 0.0 | 751.0 |
| Ni | 180 | 183 | 0.0 | 0.0 | 461 | 0.0 | 0.0 |
| Se | 156 | 86 | 0.3 | 0.3 | 101 | 0.0 | 0.0 |
| Ag | 53 | 44 | 0.1 | 0.0 | 81 | 0.0 | 0.0 |
| Na | 6,720 | 5,340 | 11,000 | 11,900 | 6,880 | 237,000 | 223,000 |
| Zn | 244,000 | 229,000 | 0.4 | 77.7 | 100,000 | 4.2 | 17,300 |

As can be seen from the data summarized in Table 4, treatment with a caustic silica solution reduced the lead (i.e., Pb) content of the test material from 18,600 mg/kg (BHD) to 9,400 mg/kg (BHD-FGD) to 1,820 mg/kg (BHD-FGC); that is, to a value of about 9.8% of the original value (a 90.2% reduction). Similarly, treatment with a caustic silica solution reduced the zinc (i.e., Zn) content of the test material from 244,000 mg/kg (BHD) to 229,000 mg/kg (BHD-FGD) to 100,000 mg/kg (BHD-FGC); that is, to a value of about 43% of the original value (a 57% reduction).

Thus, treatment with a caustic silica solution permitted a slightly better reduction in the lead content of the text material than did the sodium hydroxide control solution (90.3% reduction instead of 90.2% reduction). Treatment with a caustic silica solution also permitted a substantially better reduction in the zinc content of the text material than did the sodium hydroxide control solution (66% reduction instead of 57% reduction).

Finally, samples of test material (BHD), residue (BHD-FGC), and control residue (BHD-SHC), were analyzed for the metal leachability using EPA Method 1311 entitled "Toxicity Characteristic Leaching Procedure" (TCLP). The data are summarized in Table 5 below.

Table 5 -

| Example 5: Electric Arc Furnace Baghouse Dust - TCLP Data | | | | |
|---|---|---|---|---|
| Metal | BHD (mg/L) | EPA Regulatory Limits (mg/L) | BHD-FGC (mg/L) | BHD-SHC (mg/L) |
| Al | 0.1 | † | 0.1 | 0.1 |
| As | 0.0 | 5 | 0.0 | 0.0 |
| Ba | 1.0 | 100 | 1.2 | 4.5 |
| Cd | 10.7 | 1 | 0.0 | 0.7 |
| Cr | 0.0 | 5 | 0.1 | 0.3 |
| Cu | 0.4 | † | 0.1 | 0.0 |
| Fe | 0.0 | † | 0.0 | 0.0 |
| Pb | 62.6 | 5 | 0.0 | 0.0 |
| Ni | 0.1 | † | 0.0 | 1.5 |
| Se | 0.0 | 1 | 0.0 | 0.0 |
| Ag | 0.0 | 5 | 0.0 | 0.0 |
| Na | 342.0 | † | 1750 | 354.0 |
| Zn | 1020 | † | 0.0 | 42.6 |

† Regulatory levels have not yet been established for these metals.

As can be seen from the data summarized in Table 5, treatment with a caustic silica solution reduced the leachable amounts of Pb, Zn, and Cd to values well below the regulatory limits (where applicable). In particular, the leachable amount of Pb was reduced from 62 mg/L to below the detection limit. Similarly, the leachable amount of Zn was reduced from 1020 mg/L to below the detection limit; this represents an improvement over the use of sodium hydroxide control solution, which reduced the leachable amount of Zn to 42.6 mg/L. Similarly, the leachable amount of Cd was reduced from 10.7 mg/L to below the detection limit; this represents an improvement over the use of sodium hydroxide control solution, which reduced the leachable amount of Cd to 0.7 mg/L.

## D. Standard Methods of Sample Preparation and Analysis

The Environmental Protection Agency (EPA) has developed a variety of standardized procedures for sample preparation and analysis. These standardized procedures facilitate direct and accurate comparison of analysis results obtained by different laboratories.

EPA Method 3050A, entitled "Acid Digestion of Sediments, Sludges, and Soils," is described in detail in the EPA publication of the same name. This method is an acid digestion procedure used to prepare sediments, sludges, and soil samples for analysis by flame or furnace atomic absorption spectroscopy or by inductively coupled argon plasma spectroscopy. Briefly, in this method, a sample of approximately 1 to 2 grams is accurately weighed. To the sample is added 10 mL of nitric acid (*i.e.,* $HNO_3$, 1:1), and the mixture heated to 95°C and refluxed for 10 to 15 minutes without boiling. The mixture is allowed to cool to room temperature. A further 5 mL of concentrated nitric acid (*i.e.,* $HNO_3$) is added the mixture refluxed for an additional 30 minutes. The mixture is allowed to cool to room temperature, and 2 mL of water and 3 mL of hydrogen peroxide (*i.e.,* $H_2O_2$, 30%) added. The mixture is gently heated to begin reaction; caution is required to ensure that excessive effervescence does not result in loss of mixture. While heating, additional hydrogen peroxide (*i.e.,* $H_2O_2$, 30%) is added in 1 mL aliquots, until effervescence is minimal, for a total amount not exceeding 10 mL. If the sample is to be analyzed using inductively coupled plasma (ICP), the mixture is further prepared by adding 5 mL of concentrated hydrochloric acid (*i.e.,* HCl) and 10 mL of water, returning the mixture to a hot plate, and refluxing for 15 minutes at 95°C. The mixture is allowed to cool to room temperature, filtered, and diluted to 100 mL with water.

EPA Method 3010, entitled "Acid Digestion of Extracts for Total Recoverable or Dissolved Metal for Analysis by FLAA or ICP Spectroscopy," is described in detail in the EPA publication of the same name. Briefly, when this method is used for the detection of metals, 2 mL of concentrated nitric acid (*i.e.,* $HNO_3$) and 5 mL of concentrated hydrochloric acid (*i.e.,* HCl) is added to a 100 mL aliquot of the sample liquid. If the sample is to be spiked, the spike solution is added at this time. The mixture is then heated in a steam bath or on a hot plate at 90-95°C until the volume is reduced to 10-15 mL. The mixture is allowed to cool to room temperature, and filtered only if necessary (the filter is pre-cleaned with dilute nitric acid). The final volume is adjusted to 100 mL by the addition of water.

EPA Method ILMO 4.0 (CLP SOW), entitled "Soil/Sediment Sample Preparation," is described in detail in the EPA publication of the same name. This method is an acid digestion procedure used to prepare sediments, sludges, and soil samples for analysis by flame or furnace atomic absorption spectroscopy or by inductively coupled argon plasma spectroscopy. Briefly, in this method, the sample is mixed thoroughly to achieve homogeneity, and a sample of 1 to 1.5 grams accurately weighed and transferred to a 250 mL beaker. To the sample is added 10 mL of nitric acid *(i.e.,* $HNO_3$, 1:1), and the slurry mixed and covered with a watch glass. The mixture is heated to 95°C and refluxed for 10 minutes. The sample is allowed to cool to room temperature, and an additional 5 mL of nitric acid *(i.e.,* $HNO_3$, 1:1) added and the mixture again refluxed at 95°C for 30 minutes. The sample is allowed to cool to room temperature, and 2 mL of water and 3 mL of hydrogen peroxide *(i.e.,* $H_2O_2$, 30%) added. The mixture is gently heated to begin reaction, and the sample heated until effervescence subsides. While heating, additional hydrogen peroxide *(i.e.,* $H_2O_2$, 30%) is added in 1 mL aliquots until effervescence is minimal, for a total amount not exceeding 10 mL. The mixture is then allowed to cool to room temperature, and 5 mL of hydrochloric acid *(i.e.,* HCl, 1:1) and 10 mL of water added. The mixture is heated to 95°C for 10 minutes, allowed to cool, and diluted to 100 mL with water.

EPA Method ILMO 4.0 (CLP SOW), entitled "Water Sample Preparation (for ICP)," is described in detail in the EPA publication of the same name. Briefly, in this method, the sample is mixed thoroughly by shaking and a 100 mL aliquot transferred to a 250 mL beaker. To the sample is added 2 mL of nitric acid *(i.e.,* $HNO_3$, 1:1) and 10 mL of hydrochloric acid *(i.e.,* HCl, 1:1). If the sample is to be spiked, the spike solution is added at this time. The mixture heated for 2 hours at 95°C, allowed to cool to room temperature, filtered, and the volume adjusted to 100 mL with water.

EPA Method 6010A, entitled "Inductively Coupled Plasma-Atomic Emission Spectroscopy (ICP)," is described in detail in the EPA publication of the same name. This method permits the quantification of trace amounts of a number of metals, such as the "RCRA 8" metals *(i.e.,* aluminum, cadmium, arsenic, lead, silver, mercury, barium, and selenium), as well as copper, nickel, platinum, palladium and gold in solution. Briefly, in this method, the instrument is set with proper operating parameters and conditions, as provided by the instrument manufacturer. The voltage is also set according to the manufacturer's recommendations. The argon gas is ignited, and the plasma is ionized and allowed to stabilize for approximately 30 minutes to ensure the instrument is thermally stable. The instrument is then profiled and calibrated according to the manufacturer's recommended procedures. Typically, the profile is done using a mercury arc lamp. The instrument is calibrated with calibration standard (as outlined in section 5.4 of the EPA publication). Prior to analysis, the instrument is flushed with 1% nitric acid.

EPA Method 7471A, entitled "Mercury in Solid or Semisolid Waste (Manual Cold-Vapor Technique)," is described in detail in the EPA publication of the same name. Briefly, in this method, triplicate samples of 0.2 grams of the accurately weighed, and to each is added 5 mL of water and 5 mL of aqua regia. The mixtures are heated for 2 minutes at 95°C, and the mixtures allowed to cool. To each mixture is added 50 mL water and 15 mL of 5% (w/v) potassium permanganate solution *(i.e.,* $K_2MnO_4$, mercury-free). The mixtures are mixed thoroughly, heated at 95°C for 30 minutes, and allowed to cool. To each mixture is added 6 mL of sodium chloride hydroxylamine sulfate (prepared by dissolving 12 grams of sodium chloride and 12 grams of hydroxylamine sulfate in reagent grade water to yield 100 mL. of solution) to reduce the excess permanganate. During analysis, a circulating pump (with a pre-adjusted rate of 1 liter/min) is run continuously. The measurement should reach a maximum within about 30 sec.

EPA Method 1311, entitled "Toxicity Characteristic Leaching Procedure" is described in detail in the EPA publication of the same name. This method is designed to determine the mobility of both organic and inorganic analytes present in liquid, solid, and multiphasic wastes. Briefly, in this method, for materials containing greater than or equal to 0.5% solids, the liquid, if any, is separated from the solid phase and stored for later analysis; the particle size of the solid phase is reduced, if necessary. The solid phase is extracted with an extraction fluid (comprising glacial propanoic acid, $CH_3CH_2COOH$, and, if necessary, sodium hydroxide, NaOH), and the liquid extract separated from the solid phase by filtration through a 0.6-0.8 µm glass fiber filter. The liquid and liquid extract are combined and analyzed, or, if necessary, analyzed separately and the results combined mathematically.

## Claims

1. A method for the extraction of an element from a starting material comprising solids, said solids comprising said element, which method comprises the steps of:

   providing a liquid caustic solution;
   contacting said starting material with said caustic solution to form a mixture of solids and liquid, thereby solubilizing said element in said liquid; and
   separating a liquid extract from said mixture of solids and liquid, said liquid extract containing said solubilized element;

    characterized in that the liquid caustic solution is a liquid caustic silica solution.

2. A method for the extraction of an element from a starting material comprising solids, said solids comprising said element, which method comprises the steps of:

    providing a liquid caustic solution;
    contacting said starting material with said caustic solution to form a mixture of solids and liquid, thereby chemically altering said solids;
    separating a solid residue from said mixture of solids and liquid, said solid residue containing said element; and recovering said element from said solid residue;

    characterized in that the liquid caustic solution is a liquid caustic silica solution.

3. The method according to claim 1 or 2, wherein said caustic silica solution comprises 0.001% to about 5% w/w dissolved silica.

4. The method according to any one of claims 1 to 3, wherein said caustic silica solution comprises silica; and one or more of sodium hydroxide, potassium hydroxide, and ammonium hydroxide.

5. The method according to claim 4, wherein said caustic silica solution comprises silica; and 1-60% w/w sodium hydroxide.

6. The method according to any one of claims 1 to 5, wherein said contacting is performed at a temperature of 10-200°C for a period of 10 minutes to 6 hours.

7. The method according to claim 6, wherein said contacting is performed under a pressure of 0.1 to 5 MPa.

8. The method according to any one of claims 1 to 7, wherein said starting material comprises a mineral ore, soil, toxic waste, dust produced through a steelmaking process, or dust produced by an electric arc furnace.

9. The method according to any one of claims 1 to 8, wherein said element is a metal.

10. The method according to claim 9, wherein said element is a heavy metal, noble metal, platinum group metal, or toxic metal.

11. The method according to claim 9, wherein said element is Pb, Au, Cd, Zn, As, Ba, Cr, Hg, Se, Ag, Pt, Ti, V, Mo, Zr or Pd.

12. The method according to claim 11, wherein said element is Pb, Au, Cd or Zn.

13. The method according to any one of claims 1 and 3 to 12, further comprising the step of; recovering said solubilized element from said liquid extract.

14. The method according to claim 13, wherein said recovery is achieved by precipitation of insoluble salts, or by electrowinning, or by electrodeposition.

**Patentansprüche**

1. Verfahren zur Extraktion eines Elements aus einem Ausgangsmaterial, das Feststoffe enthält, welche Feststoffe dieses Element umfassen, wobei das Verfahren die folgenden Schritte umfaßt:

    Bereitstellen einer flüssigen Ätzlösung;
    Zusammenbringen des Ausgangsmaterials mit der Ätzlösung zum Erhalt eines Gemischs aus Feststoffen und Flüssigkeit, wobei das Element in der Flüssigkeit löslich gemacht wird; und
    Abtrennen eines Flüssigextrakts aus dem Gemisch der Feststoffen und Flüssigkeit, wobei der Flüssigextrakt das löslichgemachte Element enthält;

dadurch gekennzeichnet, daß die flüssige Ätzlösung eine flüssige Siliciumdioxid-Ätzlösung ist.

2. Verfahren zur Extraktion eines Elements aus einem Ausgangsmaterial, das Feststoffe enthält, welche Feststoffe das Element umfassen, wobei das Verfahren die folgenden Schritte umfaßt:

Bereitstellen einer flüssigen Ätzlösung;
Zusammenbringen des Ausgangsmaterials mit der Ätzlösung zum Erhalt eines Gemischs aus Feststoffen und Flüssigkeit, wobei die Feststoffe chemisch verändert werden;
Abtrennen eines festen Rückstands aus dem Gemisch aus Feststoffen und Flüssigkeit, wobei der feste Rückstand das Element enthält; und
Gewinnen des Elements aus dem festen Rückstand;

dadurch gekennzeichnet, daß die flüssige Ätzlösung eine flüssige Siliciumdioxid-Ätzlösung ist.

3. Verfahren nach Anspruch 1 oder 2, wobei die Siliciumdioxid-Ätzlösung 0,001 bis etwa 5 Gew.-% gelöstes Siliciumdioxid umfaßt.

4. Verfahren nach einem der Ansprüche 1 bis 3, wobei die Siliciumdioxid-Ätzlösung Siliciumdioxid umfaßt; und eines oder mehrere von Natriumhydroxid, Kaliumhydroxid und Ammoniumhydroxid.

5. Verfahren nach Anspruch 4, wobei die Siliciumdioxid-Ätzlösung Siliciumdioxid umfaßt; und 1-60 Gew.-% Natriumhydroxid.

6. Verfahren nach einem der Ansprüche 1 bis 5, wobei das Zusammenbringen bei einer Temperatur von 10-200°C über einen Zeitraum von 10 Minuten bis 6 Stunden hinweg vorgenommen wird.

7. Verfahren nach Anspruch 6, wobei das Zusammenbringen unter einem Druck von 0,1 bis 5 MPa vorgenommen wird.

8. Verfahren nach einem der Ansprüche 1 bis 7, wobei das Ausgangsmaterial ein Mineralerz, Erde, Giftmüll, durch einen Stahlherstellungsprozeß erzeugten Staub oder durch einen elektrischen Lichtbogenofen produzierten Staub umfaßt.

9. Verfahren nach einem der Ansprüche 1 bis 8, wobei das Element ein Metall ist.

10. Verfahren nach Anspruch 9, wobei das Element ein Schwermetall, Edelmetall, Metall der Platingruppe oder giftiges Metall ist.

11. Verfahren nach Anspruch 1, wobei das Element Pb, Au, Cd, Zn, As, Ba, Cr, Hg, Se, Ag, Pt, Ti, V, Mo, Zr oder Pd ist.

12. Verfahren nach Anspruch 11, wobei das Element Pb, Au, Cd oder Zn ist.

13. Verfahren nach einem der Ansprüche 1 und 3 bis 12, das außerdem die folgenden Schritte umfaßt:

Gewinnen des löslichgemachten Elements aus dem Flüssigextrakt.

14. Verfahren nach Anspruch 13, wobei die Gewinnung durch Fällung unlöslicher Salze oder durch elektrolytische Extraktion oder durch elektrolytische Abscheidung erreicht wird.

**Revendications**

1. Procédé d'extraction d'un élément à partir d'un matériau de départ comportant des matières solides, lesdites matières solides comportant ledit élément, lequel procédé comporte les étapes consistant à :

fournir une solution caustique liquide,

mettre en contact ledit matériau de départ et ladite solution caustique pour former un mélange de matières solides et de liquide, de manière à solubiliser ledit élément dans ledit liquide, et

séparer un extrait liquide dudit mélange de matières solides et de liquide, ledit extrait liquide contenant ledit élément solubilisé,

caractérisé en ce que la solution caustique liquide est une solution caustique liquide de silice.

2. Procédé d'extraction d'un élément à partir d'un matériau de départ comportant des matières solides, lesdites matières solides comportant ledit élément, lequel procédé comporte les étapes consistant à :

fournir une solution caustique liquide,

mettre en contact ledit matériau de départ et ladite solution caustique pour former un mélange de matières solides et de liquide, de manière à modifier chimiquement lesdites matières solides,

séparer un résidu solide dudit mélange de matières solides et de liquide, ledit résidu solide contenant ledit élément, et

récupérer ledit élément dudit résidu solide,

caractérisé en ce que la solution caustique liquide est une solution caustique liquide de silice.

3. Procédé selon la revendication 1 ou 2, dans lequel ladite solution caustique de silice comporte entre 0,001 % et environ 5 % p/p de silice dissoute.

4. Procédé selon l'une quelconque des revendications 1 à 3, dans lequel ladite solution caustique de silice comporte de la silice, et un ou plusieurs composés parmi l'hydroxyde de sodium, l'hydroxyde de potassium et l'hydroxyde d'ammonium.

5. Procédé selon la revendication 4, dans lequel ladite solution caustique de silice comporte de la silice, et de 1 à 60 % p/p d'hydroxyde de sodium.

6. Procédé selon l'une quelconque des revendications 1 à 5, dans lequel ladite mise en contact est effectuée à une température comprise entre 10 et 200°C pendant une période allant de 10 minutes à 6 heures.

7. Procédé selon la revendication 6, dans lequel ladite mise en contact est effectuée sous une pression comprise entre 0,1 et 5 MPa.

8. Procédé selon l'une quelconque des revendications 1 à 7, dans lequel ledit matériau de départ comporte un minerai minéral, de la terre, un déchet toxique, de la poussière produite par un processus de préparation de l'acier, ou de la poussière produite par un four à arc électrique.

9. Procédé selon l'une quelconque des revendications 1 à 8, dans lequel ledit élément est un métal.

10. Procédé selon la revendication 9, dans lequel ledit élément est un métal lourd, un métal noble, un métal du groupe platine, ou un métal toxique.

11. Procédé selon la revendication 1, dans lequel ledit élément est Pb, Au, Cd, Zn, As, Ba, Cr, Hg, Se, Ag, Pt, Ti, V, Mo, Zr ou Pd.

12. Procédé selon la revendication 11, dans lequel ledit élément est Pb, Au, Cd ou Zn.

13. Procédé selon l'une quelconque des revendications 1 et 3 jusqu'à 12, comportant de plus l'étape consistant à récupérer ledit élément solubilisé à partir dudit extrait liquide.

14. Procédé selon la revendication 13, dans lequel ladite récupération est effectuée par précipitation de sels insolubles, ou par extraction électrolytique, ou par électrodéposition.